# EUROPEAN PATENT SPECIFICATION

(11) **EP 3 030 841 B1**
(45) Date of publication and mention of the grant of the patent: **07.06.2017**
(21) Application number: 14796255.9
(22) Date of filing: 08.08.2014
(51) Int. Cl.: F23G 5/00, F23G 5/027, F23G 5/04, F23G 5/46

(54) **FACILITY AND METHOD FOR THE TREATMENT OF ORGANIC COMPOUNDS**
ANLAGE UND VERFAHREN ZUR BEHANDLUNG ORGANISCHER VERBINDUNGEN
INSTALLATION ET PROCÉDÉ POUR LE TRAITEMENT DE COMPOSÉS ORGANIQUES

(30) Priority: 08.08.2013 IT PD20130230
(43) Date of publication of application: 15.06.2016
(73) Proprietor: Ronda Engineering S.r.l, 36010 Zane' (VI) (IT)
(72) Inventor: RONDA, Gianantonio, I-36010 Zane' (VI) (IT)
(74) Representative: Locas, Davide
(86) International application number: PCT/IB2014/063805
(87) International publication number: WO 2015/019330

(56) References cited:
- AU-A1- 2011 253 788
- DE-A1-102009 012 668
- FR-A1- 2 983 744
- US-A1- 2010 319 255

## Description

This invention relates to a facility and method for the treatment of organic compounds, in particular for the treatment of biomass deriving from human activities associated with agriculture, horticulture and forestry, and from urban organic wastes.

The invention has its preferred but not exclusive application in the sector of the treatment of organic compounds for the production of electrical and/or thermal energy.

In this sector facilities for the incineration of wastes by means of a high temperature combustion process from which the gaseous mixture produced is typically utilised for the generation of thermal imagery are widely in use. As is known, despite modern systems for the removal of pollutants provided in such facilities, the substances emitted from incinerators contribute to a progressive increase in environmental pollution.

Facilities, typically of small capacity, which carry out a process of thermochemical decomposition of organic matter in which the latter is divided into a solid fraction and a gaseous fraction which can be used to generate electrical and/or thermal energy are also known.

The process of thermochemical decomposition finds application in pyrolysis and gasification facilities which however are more complex facilities than incinerators.

Up to now the construction of such facilities has been at an experimental stage which is intended in particular to achieve greater energy efficiency in the corresponding processes for the generation of electrical energy.

On the other hand pyrolysis and gasification facilities have many advantages in comparison with known incinerators, such as:
1. greater efficiency in the system and therefore a greater efficiency of the process;
2. simpler management of the processed products;
3. no atmospheric emissions of processed gas apart from exhaust gases produced by internal combustion engines for the generation of electrical energy;
4. completely inert discharged solid material.

One example of a recycling facility which uses a pyrolysis process is described in German patent application DE 10 2009 012668.

However in this facility the pyrolysis process does not take place with the control of pressure, with the result that it is difficult to control the process unless it is operated at particularly high pressures. In fact when the process is carried out at ambient pressure there is inevitably uncontrolled ingress of external agents.

Another example of process for waste treatment is disclosed in AU 2011 253 788.

The problem underlying this invention is that of providing a facility and method for the treatment of organic compounds which is functionally and structurally designed to overcome the disadvantages mentioned with reference to the cited known art.

This problem has been resolved by the invention through a facility and method for the treatment of organic compounds achieved in accordance with the attached claims.

Characteristics and advantages of the invention will be more apparent from the description of a preferred embodiment illustrated by way of indication and without limitation with reference to the appended drawings in which:
- Figure 1 is a diagrammatical perspective view of a facility for the treatment of organic compounds according to the invention;
- Figure 2 is a diagrammatical view from above of a facility for the treatment of organic compounds according to the invention;
- Figure 3 is a perspective view of a unit and corresponding drying block of a facility for the treatment of organic compounds according to the invention;
- Figure 4 is a flow diagram representing the process for the treatment of organic compounds according to the invention;
- Figure 5 is a diagrammatical view in cross-section of a heat exchanger of a facility for the treatment of organic compounds according to the invention.

In the enclosed figures a facility for the treatment of organic compounds constructed in accordance with this invention is indicated as a whole by reference number 100.

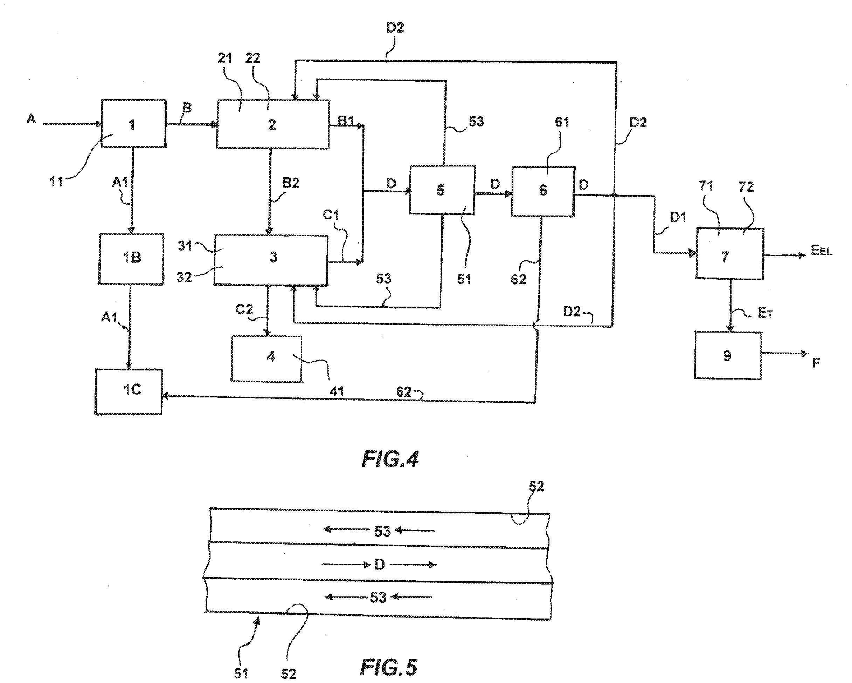

Preferably, organic compounds A, diagrammatically illustrated in Figure 4, comprise grass cuttings, pruning waste, woodworking waste and/or urban organic wastes. Organic compounds A are also known as biomass. More preferably organic compounds A are biomass of the ligneous type.

In any event, as will be evident from the remainder of the description, the technical characteristics of the facility make it advantageously possible to achieve optimum treatment of all substances of an organic type, thus rendering the facility according to the invention particularly flexible.

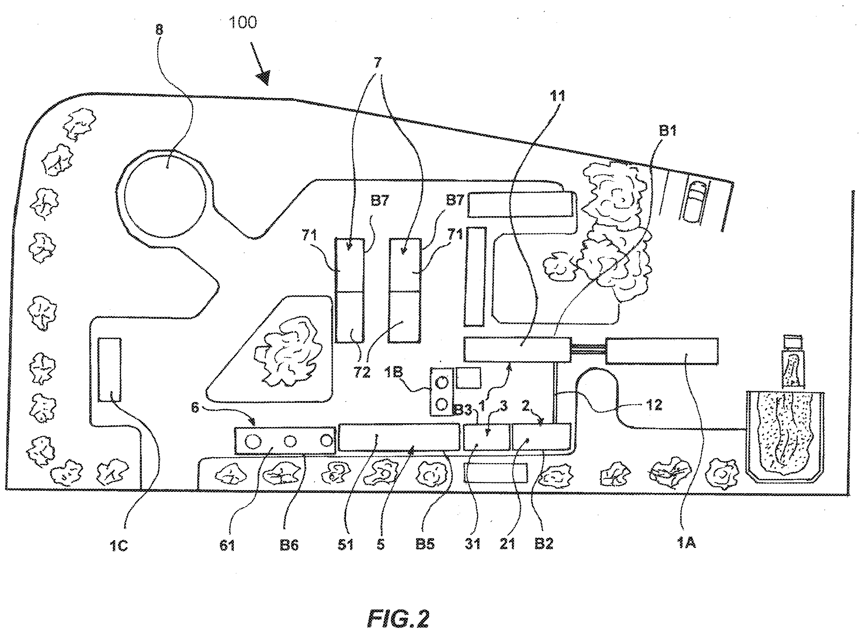

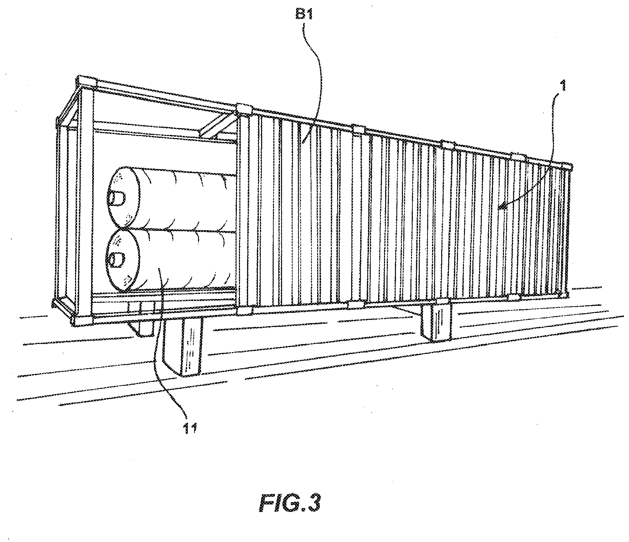

In accordance with a preferred embodiment facility 100 comprises a first unit 1 incorporating drying means 11, diagrammatically illustrated in Figures 2 and 3, suitable for treating the abovementioned organic compounds A in order to obtain a substantially anhydrous material B which is subsequently subjected to a pyrolysis process.

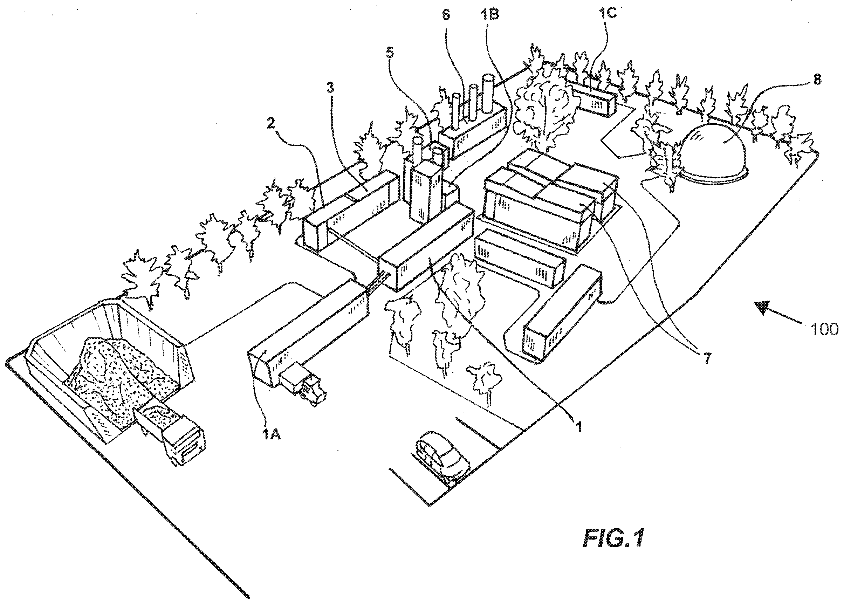

With reference again to Figure 1, organic compounds A preferably undergo a stage of grinding and preparation to reduce them into substantially uniform fragments which are then deposited in storage unit 1A before being delivered to the drying treatment. This arrangement makes it possible to reduce organic compounds A to a size which is suitable for the subsequent treatments provided by facility 100.

First unit 1 provides for heating organic compounds A by drying means 11, which are in themselves known, to evaporate the water A1 present therein, thus obtaining a substantially anhydrous material B.

Advantageously evaporated water A1 is delivered from first unit 1 to a condenser 1B and subsequently to a purifier 1C for condensation and purification respectively in order to bring the concentration of polluting substances present to a value below the limit imposed by current regulations.

Preferably purification takes place through an electrolysis process. Substantially anhydrous material B is transported, preferably by means of a screw conveyor 12 illustrated in Figure 2, to a second unit 2 in facility 100 so that a pyrolysis process can be performed.

Substantially anhydrous material B is therefore subjected to a pyrolysis process from which a gaseous fraction B1 and a solid fraction B2 resulting from thermochemical decomposition of the material treated are obtained.

In detail, with reference to Figure 2, second unit 2 includes a first reactor 21 in which substantially anhydrous material B is heated to a temperature of preferably 850-900°C. Second unit 2 also comprises control means 22 to carry out the pyrolysis process at a pressure slightly above the atmospheric pressure in such a way as to prevent the ingress of air into first reactor 21, that is to prevent the ingress of air coming from the external environment into first reactor 21, so that the process takes place substantially in the absence of ingress of air, that is it is performed substantially in the absence of oxidising agents such as oxygen coming from the external environment. This feature makes it possible to avoid an excess pressure in first reactor 21, fact that would require careful management in the course of the pyrolysis process. Also it should be borne in mind that the absence of ingress of air during the process prevents an uncontrolled ingress of oxidising agents whose present would make control particularly complex. The applicant has in fact found that by using a reactor in which the pressure is maintained only slightly above the atmospheric pressure it is possible to avoid the uncontrolled ingress of external agents without however requiring the high pressures provided by facilities operating at overpressure.

It will be noted that in the context of this invention the expression "pressure slightly above the atmospheric pressure" indicates a pressure greater than the latter, without however requiring any particular arrangements in the facility in comparison with operation at atmospheric pressure. For example a pressure in first reactor 21 which is greater than atmospheric pressure by a value of between 2 and 10 mm of water column (that is a pressure which is greater than atmospheric pressure by a value of between 19.613 Pa and 98.064 Pa) can be regarded as a pressure slightly above the atmospheric pressure according to the meaning of this invention.

Conduct of the pyrolysis process in the absence of an oxidising agent makes it possible to obtain a gaseous fraction B1 from substantially anhydrous material B comprising mainly hydrocarbons having a simple molecular chain (mainly methane CH₄, carbon monoxide CO, hydrogen H₂ and carbon dioxide CO₂).

In greater detail, a range of between 70 and 80% of the total of the abovementioned gaseous fraction B1 may comprise:
- Methane CH₄;
- Carbon monoxide CO;
- Hydrogen H₂;

And the remaining 20-30% of the total may comprise:
- H₂O
- Carbon dioxide CO₂;
- Nitrogen N₂, in a small quantity.

Otherwise the abovementioned characteristics to carry out of the pyrolysis process make it possible to obtain the solid fraction B2 from substantially anhydrous material B, that is the residual solid material from the pyrolysis process, which is essentially carbon based and is transported preferably by means of a screw conveyor to a third unit 3 of facility 100 for a gasification process to be performed.

Control means 22 preferably comprise subdivider valves located at an entrance of second unit 2 for inserting of substantially anhydrous material B and counterpressure means located at an exit of second unit 2 for the exit of solid fraction B2 of substantially anhydrous material B to third unit 3. Advantageously, the fact that the material obtained from the drying stage is substantially anhydrous B, together with the abovementioned characteristics for performance of the pyrolysis process which that material subsequently undergoes, greatly restricts the formation of substances of carbonaceous material of intermediate molecular weight. Such substances are of a tarry consistency when subjected to a temperature below the operating temperature of the pyrolysis process and can therefore become deposited on the surfaces of facility 100 forming incrustations.

Third unit 3 includes a second reactor 31 to carry out the gasification process in which the abovementioned solid fraction B2 is heated to a temperature of preferably 900-1100°C to substantially reduce the carbon present by blowing steam provided in a controlled way through the facility, or a mixture of carbon monoxide and hydrogen. Preferably this gasification process completely reduces the carbon present in abovementioned solid fraction B2.

Specifically this process makes it possible to obtain a gaseous fraction C1 and a solid fraction C2 from solid material B2 which is left over from the pyrolysis process.

Preferably first and second reactors 21, 31 take the form of a single reactor subdivided into two parts to carry out of the pyrolysis process and the subsequent gasification process.

In a preferred embodiment of the invention the drying process, together with the pyrolysis and gasification processes, advantageously make it possible to reduce organic compounds A entering first unit 1 by approximately 95%, that is solid fraction C2 obtained from the exiting gasification process represents approximately 5% of organic compounds A entering the drying process.

With reference to Figure 4, facility 100 for the treatment of organic compounds A comprises a fourth unit 4 including vitrification means 41 to carry out a process of vitrification of solid fraction C2 obtained from the gasification process. This solid fraction C2 is substantially devoid of carbon because this has been converted into a gaseous form included in the abovementioned gaseous fraction C1.

Therefore solid fraction C2, that is the solid residue obtained from the gasification process, essentially comprises inert ashes such as metals and glass originally present in organic compounds A, and possibly traces of toxic/harmful substances which are inerted by the vitrification process, which is in itself known, thus making it possible to dispose of that solid residue to a dump.

It will be noted that the vitrification process is facilitated by the high temperature, approximately 1200°C, to which solid fraction C2 obtained from second reactor 31 is subjected.

As described in the case of second unit 2, third unit 3 comprises control means 32 to carry out the gasification process at a pressure slightly above the atmospheric pressure in order to avoid the ingress of air into second reactor 31, that is in such a way as to prevent the ingress of air coming from the external environment into second reactor 31, so that this process takes place substantially in the absence of ingress of air, that is it takes place substantially in the absence of oxidising agents coming from the external environment.

Preferably a pressure in second reactor 31 which is greater than atmospheric pressure by a value of between 2 and 10 mm of water column (that is a pressure greater than atmospheric pressure by a value between 19.613 Pa and 98.064 Pa) can be regarded as a pressure slightly above the atmospheric pressure according to the meaning of this invention.

Control means 32 preferably comprise subdivider valves located at an entrance of the third unit 3 for inserting of solid fraction B2 of substantially anhydrous material B and counterpressure means located at an exit of the third unit 3 for exit of solid fraction C2 obtained from the gasification process.

Advantageously, the abovementioned features of the embodiment of the gasification process together with the stages of drying and pyrolysis according to the invention also strongly limit the formation of substances of a carbonaceous nature having an intermediate molecular weight which can form encrustations in facility 100.

The process of pyrolysis and gasification, which are placed in cascade, make it possible to obtain a gaseous mixture D comprising gaseous fraction B1 of substantially anhydrous material B and gaseous fraction C1 obtained from the abovementioned gasification process for the generation of electrical energy E_{EL} and/or thermal energy, as will be more particularly described below.

In a preferred form of the invention a principal part D1 of gaseous mixture D, preferably approximately 90% of the total, is intended for the production of electrical energy E_{EL} while the residual part of gaseous mixture D, called secondary part D2, preferably approximately 10% of the total, is intended to feed combustion means, such as burners, to feed the abovementioned pyrolysis and gasification processes when the latter reach steady-state conditions.

Specifically steady-state conditions are reached when the pyrolysis and gasification processes are in a substantially stationary state in which they take place according to predetermined conditions (for example of temperature and pressure).

In other words, after a first transition stage in which first and second reactors 21, 31 of facility 100 are brought up to a predetermined operation state corresponding to which the pyrolysis and gasification processes take place under steady-state conditions, secondary part D2 of gaseous mixture D is intended to feed the burners to feed the abovementioned processes.

It is obvious that this makes it possible to reduce the proportion of energy originating from external sources for feeding the pyrolysis and gasification processes, thus achieving a better energy efficiency of facility 100, that is a greater energy efficiency for facility 100, and thus achieving obvious advantages of an economic nature.

Furthermore, downstream from third unit 3, facility 100 for the treatment of organic compounds A may comprise a fifth unit 5 comprising a heat exchanger 51 to cool gaseous mixture D before it is subdivided into principal part D1 for the generation of electrical energy E_{EL} and secondary part D2 intended to feed the abovementioned processes.

In a preferred embodiment of the invention heat exchanger 51 is of the surface type comprising a cooling circuit 52 through which a cooling fluid 53 flows. Gaseous mixture D is therefore cooled by countercurrent heat exchange with cooling fluid 53.

With reference to Figure 5, heat exchanger 51 comprises a shell and a first tubular element through which gaseous mixture D flows. The first tubular element has the shell on, so that the shell is coaxial with the first tubular element. This shell comprises cooling circuit 52 for conduct of the countercurrent heat exchange process between the fluid within the first tubular element and the fluid within the shell. Preferably cooling fluid 53 is substantially air which is inserted into heat exchanger 51 at ambient temperature, or at around 20°C.

Heat exchanger 51 makes it possible to cool gaseous mixture D from a temperature of approximately 1200°C on exit from third unit 3 to a temperature of approximately 200°C.

Advantageously cooling of gaseous mixture D takes place over a short time so that the formation of undesired substances, such as tarry substances and dioxins, is prevented.

In addition, the invention may provide that at least part of the flue gases produced by the burners are fed to a cooling circuit 52 for heating cooling fluid 53 by contact. In one embodiment of the invention, part of the flue gases produced by the burners is introduced into cooling circuit 52 approximately half way along the circuit so that cooling fluid 53 has a temperature of approximately 700°C at the point where gaseous mixture D is introduced into heat exchanger 51.

According to a preferred embodiment of the invention, at the point where gaseous mixture D is introduced into heat exchanger 51 provision is made for tapping off at least part of cooling fluid 53, preferably all of fluid 53, at a temperature of 700°C in order to feed the abovementioned pyrolysis and gasification processes together with secondary part D2 of gaseous mixture D.

In detail, the pyrolysis and gasification processes are fed exclusively by secondary part D2 of gaseous mixture D and by cooling fluid 52 exiting from heat exchanger 51 when these processes reach steady-state conditions. This characteristic makes it possible to carry out the pyrolysis, gasification and vitrification processes in such a way that they are self-feeding, that is, in other words, when the abovementioned steady-state conditions are established, the facility 100 does not need for an external source for providing a feed to the pyrolysis and gasification processes. There is therefore an increase in the energy efficiency of facility 100 according to the invention.

Facility 100 for the treatment of organic compounds A may also comprise a sixth unit 6 including a purification system 61 for purification of gaseous mixture D exiting from fifth unit 5, that is exiting from heat exchanger 51, to remove possible dust and other pollutants such as pollutants in the liquid state or of a tarry consistency present in suspension.

In this case, after purification of gaseous mixture D, the latter is subdivided into the principal part D1 and secondary part D2 mentioned above. Purification system 61 comprises a plurality of washing columns, in themselves known, which are capable of purifying abovementioned gaseous mixture D by means of a wash fluid 62, for example a basic aqueous solution.

This wash fluid 62 is subsequently delivered to a purifier 1C for purification in a manner similar to that provided for the evaporated water obtained from first unit 1. In addition to this, part of the purified water may be filtered and sent to a process water circuit to satisfy the water needs of the utilities provided for facility 100.

One embodiment of the invention may provide for one or more sensors for continuous monitoring of gaseous mixture D downstream from the gasification process but upstream from purification system 61 to control conduct of the pyrolysis and gasification processes.

These sensors are preferably intended to detect valuable combustible gases such as hydrogen H₂, methane CH₄, carbon monoxide CO, acetylene C₂H₂, inert gases such as nitrogen N₂ and carbon dioxide CO₂, or undesired compounds which are harmful to the functioning of facility 100, such as acids in general and aromatic hydrocarbons.

A seventh unit 7 including one or more internal combustion engines 71, for example Otto cycle engines, which can be associated with alternators 72 for the generation of electrical energy E_{EL}, may be provided for facility 100 according to the invention.

In particular internal combustion engines 71 may be fed by the principal part D1 of gaseous mixture D purified by purification system 61.

Preferably facility 100 may provide for a pressurestat accumulator 8 for the abovementioned purified gaseous mixture upstream from internal combustion engines 71, to control the continuous functioning of the electrical energy generation E_{EL}.

It is obvious that different thermal machines for the conversion of the energy which can be derived from the principal part D1 of gaseous mixture D into electrical energy are provided by the invention, such as, for example, turbines or hydrogen cells.

In a preferred embodiment of the invention, facility 100 is capable of generating a power of 2MW by means of alternators 72 associated with internal combustion engines 71.

Advantageously, facility 100 is intended to make use of the thermal energy E_{T} produced by the operation of internal combustion engines 71, for example to generate further electrical energy.

In particular facility 100 may incorporate heating means 9 for heating a liquid F using abovementioned thermal energy E_{T}, for example to heat water to a temperature of 100°C. This heated liquid F can then be used by one or more systems such as first unit 1 for the drying treatment of organic compound A and a system for remote heating through a suitable system of piping, and/or for the generation of additional electrical energy through corresponding thermal machines.

In one embodiment of the invention, one or more of abovementioned units 1,...,7 comprised in the facility 100, preferably each of the abovementioned units 1,...,7 comprised in the facility 100 for the treatment of organic compounds A, is preassembled into corresponding independent blocks BL1,...,BL7.

Specifically, blocks BL1,...,BL7 are independent of each other because the construction of a block including the corresponding unit of facility 100 is not associated with the construction of another block, making it possible to preassemble units 1,...,7 in the factory, therefore offering high modularity for the facility.

Preferably each block BL1,...,BL7 is a metal structure of substantially solid rectangular shape such as a container, in which a corresponding unit 1,...7 (possibly without its marginal parts) is included.

Such characteristics therefore make it possible to transport each block BL1,...,BL7 to the intended locality for the construction of facility 100 and subsequently to connect them appropriately in order to start up the latter.

It will be noted that factory preassembly of the abovementioned units 1,...7 into corresponding blocks BL1,...,BL7 will advantageously make it possible to finish the construction of facility 100 in the location intended for its use, thus avoiding the construction and/or assembly of each of units 1,...,7 comprised in the facility 100 on site, fact that would obviously have an adverse impact on the costs and times required for constructing facility 100. Simplified management of the construction of facility 100 in the locality intended for its use is therefore achieved. Obviously a person skilled in the art could apply further modifications and variants to the invention described above in such a way as to satisfy specific and contingent application requirements, variants and modifications which would in any event fall within the scope of protection as defined by the following claims.

The invention thus resolves the problem stated, offering many advantages, including that of carrying out a facility and a method for the treatment of organic compounds comprising a pyrolysis and gasification process which is particularly simple and reliable and has greater energy efficiency than known facilities.

In particular the invention advantageously makes it possible to carry out the pyrolysis and gasification processes while avoiding overpressure in the corresponding reactors, fact that would require careful management, and to use part of gaseous mixture D obtained from such processes to feed the same, thus increasing the energy efficiency of the facility.

The stages of drying, pyrolysis and gasification also make it possible to avoid the presence of tarry substances in the gaseous mixture obtained from the facility, as well as in the waste products from the facility according to the invention.

In addition to this, the processes involved in this facility are suitable for the treatment of a wide range of substances, thus rendering the facility particularly versatile.

Furthermore, the characteristic of preassembling the plurality of units of the facility in corresponding independent blocks advantageously offers the facility a high level of modularity.

## Claims

1. A facility for the treatment of organic compounds comprising:
• a first unit (1) incorporating drying means (11) suitable for the treatment of the organic compounds (A) in order to obtain a substantially anhydrous material (B);
• a second unit (2) incorporating a first reactor (21) to carry out a process of pyrolysis of the substantially anhydrous material (B) to obtain a gaseous fraction (B1) and a solid fraction (B2) therefrom;
• a third unit (3) incorporating a second reactor (31) to carry out a process of gasification of the solid fraction (B2) of the substantially anhydrous material (B) to obtain a gaseous fraction (C1) and a solid fraction (C2) therefrom, and suitable for obtaining a gaseous mixture (D) comprising the gaseous fraction (C1) obtained from the gasification process and the gaseous fraction (B1) of the substantially anhydrous material (B) for the generation of electrical energy (E_{EL}) and/or thermal energy;
in which the first and second reactors (21, 31) comprise corresponding control means (22, 32) suitable for maintaining the pressure within the said first and second rectors (21, 31) during the pyrolysis and gasification processes at a value slightly above the atmospheric pressure in such a way as prevent the ingress of air from the exterior to interior of the reactors (21, 31), so that the processes take place substantially in the absence of ingress of oxidising agents coming from the external environment and in which a secondary part (D2) of the gaseous mixture (D) is intended to feed combustion means to feed the pyrolysis and gasification processes when these processes reach steady-state conditions, in which the value of the pressure within the first and second reactors (21, 31) is greater than atmospheric pressure by a value of between 19.613 Pa and 98.064 Pa in the course of the pyrolysis and gasification processes.

2. A facility for the treatment of organic compounds according to one of preceding claims, comprising a fourth unit (4) incorporating vitrification means (41) for performing a process of vitrifying of the solid fraction (C2) obtained from the gasification process.

3. A facility for the treatment of organic compounds according to one of preceding claims, comprising a fifth unit (5) Incorporating a heat exchanger (51) to cool the gaseous mixture (D) for the generation of electrical energy (E_{EL}) and/or thermal energy.

4. A facility for the treatment of organic compounds according to claim 3, in which the heat exchanger (51) is of the surface type comprising a cooling circuit (52) for cooling the gaseous mixture (D) by countercurrent heat exchange with a cooling fluid (53) flowing within the cooling circuit (52).

5. A facility for the treatment of organic compounds according to claim 4, in which the cooling fluid (53) is substantially air which is inserted into the heat exchanger (51) at ambient temperature.

6. A facility for the treatment of organic compounds according to claim 4 or 5, in which at least a part of the flue gases produced by the combustion means are fed to the cooling circuit (53) to heat the cooling fluid (52) by contact.

7. A facility for the treatment of organic compounds according to any one of claims 4 to 6, in which the pyrolysis and gasification processes are exclusively fed by the secondary part (D2) of the gaseous mixture (D) and from at least a part of the cooling fluid (52) drawn from the heat exchanger (51) when the processes reach steady-state conditions.

8. A facility for the treatment of organic compounds according to any one of claims 3 to 7, comprising a sixth unit (6) incorporating a purification system (61) for purification of the gaseous mixture (D) exiting from the heat exchanger (51) to remove possible suspended dust present.

9. A facility for the treatment of organic compounds according to claim 8, comprising a seventh unit (7) incorporating one or more internal combustion engines (71) which may be fed by a main part (D1) of the gaseous mixture (D) purified by the purification system (61) which may be associated with alternators (72) for the generation of electrical energy (E_{EL}).

10. A facility for the treatment of organic compounds according to claim 9, comprising heating means (9) to heat a liquid (F) through thermal energy (E_{T}) produced by the operation of the internal combustion engines (71), the heated liquid (F) being capable of being used by the drying treatment for the organic compound (A), by a remote heating system, and/or for the generation of additional electrical energy.

11. A facility for the treatment of organic compounds according to any one of the preceding claims, in which one or more of the units (1,..,7) is preassembled in corresponding blocks (BL1,..,BL7) which are Independent of each other, these blocks (BL1,..,BL7) being transportable and being capable of being connected together in such a way as to complete construction of the facility (100) in the location intended for its use.

12. A facility for the treatment of organic compounds according to any one of the preceding claims, in which the control means (22, 32) comprise subdivider valves and counterpressure means, the subdivider valves being located at an entrance of the second unit (2) for inserting of substantially anhydrous material (B), and at an entrance of the third unit (3) for inserting of the solid fraction (B2) of the substantially anhydrous material (B) respectively, the counterpressure means being located at an exit of the second unit (2) for exit of the solid fraction (B2) from the substantially anhydrous material (B) and at an exit of the third unit (3) for exit of the solid fraction (C2) obtained from the gasification process respectively.

13. A method for the treatment of organic compounds comprising the stages of:
• drying the organic compounds (A) to obtain a substantially anhydrous material (B);
• performing a process of pyrolysis of the substantially anhydrous material (B) into a first reactor (21) to obtain a gaseous fraction (B1) and a solid fraction (B2) therefrom maintaining the pressure within the first reactor (21) at a value slightly above the atmospheric pressure in such a way as prevent the ingress of air from the exterior to interior of the first reactor (21), so that the pyrolysis process takes place substantially in the absence of ingress of oxidising agents coming from the external environment;
• performing a process of gasifying the solid fraction (B2) of the substantially anhydrous material (B) into a second reactor (31) to obtain a gaseous fraction (C1) and a solid fraction (C2) therefrom maintaining the pressure within the second reactor (31) at a value slightly above the atmospheric pressure in such a way as prevent the ingress of air from the exterior to interior of the second reactor (31), so that the gasification process takes place substantially in the absence of ingress of oxidising agents coming from the external environment;
• obtaining a gaseous mixture (D) comprising the gaseous fraction (C1) obtained from the gasification process and the gaseous fraction (B1) of the substantially anhydrous material (B) for the generation of electrical and/or thermal energy;
• use of a secondary part (D2) of the gaseous mixture (D) as a feed to combustion means for feeding the pyrolysis and gasification processes when these processes reach steady-state conditions, in which in the course of the stages in which the pyrolysis and gasification processes are performed the value of the pressure within the first and second reactors (21, 31) is greater than atmospheric pressure by a value of between 19.613 Pa and 98.064 Pa.

## Patentansprüche

1. Anlage zur Behandlung von organischen Verbindungen, umfassend:
- eine erste Einheit (1) mit einer Trocknungseinrichtung (11), die für die Behandlung von organischen Verbindungen (A) geeignet ist, um ein im Wesentlichen wasserfreies Material (B) zu erhalten;
- eine zweite Einheit (2) mit einem ersten Reaktor (21), um einen Pyrolyseprozess des im Wesentlichen wasserfreien Materials (B) auszuführen, um daraus eine gasförmige Fraktion (B1) und eine feste Fraktion (B2) zu erhalten;
- eine dritte Einheit (3) mit einem zweiten Reaktor (31), um einen Vergasungsprozess der festen Fraktion (B2) des im Wesentlichen wasserfreien Materials (B) auszuführen, um daraus eine gasförmige Fraktion (C1) und eine feste Fraktion (C2) zu erhalten, und zum Erhalten eines Gasgemisches (D), dass die gasförmige Fraktion (C1), die aus dem Vergasungsprozess erhalten wird, und die gasförmige Fraktion (B1) des im Wesentlichen wasserfreien Materials (B) aufweist, zur Erzeugung von elektrischer Energie (E_{EL}) und/oder thermischer Energie geeignet ist;
- in der die ersten und zweiten Reaktoren (21, 31) entsprechende Steuerungseinrichtungen (22, 32) aufweisen, die zum Aufrechterhalten des Drucks innerhalb der ersten und zweiten Reaktoren (21, 31) während in der Pyrolyse- und Vergasungsprozesse bei einem Wert, der etwas oberhalb des Atmosphärendrucks liegt, derart geeignet sind, um den Eintritt von Luft von außen zum Inneren der Reaktoren (21, 31) zu verhindern, sodass die Prozesse im Wesentlichen ohne Eintritt von Oxidationsmitteln stattfinden, die von der äußeren Umgebung kommen, und ein Sekundärteil (D2) des Gasgemisches (D) zum Versorgen einer Verbrennungseinrichtung vorgesehen ist, um die Pyrolyse- und Vergasungsprozesse zu versorgen, wenn diese Prozesse Beharrungszustände, in denen der Druckwert innerhalb der ersten und zweiten Reaktoren (21, 31) größer als der Atmosphärendruck ist, bei einem Wert zwischen 19,613 Pa und 98,064 Pa im Rahmen der Pyrolyse- und Vergasungsprozesse erreichen.

2. Anlage zur Behandlung von organischen Verbindungen gemäß Anspruch 1, die eine vierte Einheit (4) mit einer Vitrifizierungseinrichtung (41) zum Ausführen eines Vitrifizierungsprozesses der festen Fraktion (C 2), die aus dem Vergasungsprozess erhalten wird, aufweist.

3. Anlage zur Behandlung von organischen Verbindungen gemäß einem der vorhergehenden Ansprüche, die eine fünfte Einheit (5) mit einem Wärmetauscher (51) aufweist, um das Gasgemisch (D) zur Erzeugung von elektrischer Energie (E_{EL}) und/oder thermischer Energie zu kühlen.

4. Anlage zur Behandlung von organischen Verbindungen gemäß Anspruch 3, in der der Wärmetauscher (51) ein Oberflächentyp ist, der einen Kühlkreislauf (52) zum Kühlen des Gasgemisches (D) durch einen Gegenstromwärmetauscher mit einem Kühlfluid (53) aufweist, das innerhalb des Kühlkreislaufes (52) strömt.

5. Anlage zur Behandlung von organischen Verbindungen gemäß Anspruch 4, in der das Kühlfluid (53) im Wesentlichen Luft ist, die in den Wärmetauscher (51) mit Umgebungstemperatur eingeleitet wird.

6. Anlage zur Behandlung von organischen Verbindungen gemäß Anspruch 4 oder 5, in der zumindest ein Teil der Abgase, die durch die Verbrennungseinrichtung erzeugt werden, dem Kühlkreislauf (53) zugeführt werden, um das Kühlfluid (52) durch Kontakt zu erwärmen.

7. Anlage zur Behandlung von organischen Verbindungen gemäß einem der Ansprüche 4 bis 6, in der die Pyrolyse- und Vergasungsprozesse ausschließlich durch den Sekundärteil (D2) des Gasgemisches (D) und von zumindest einem Teil des Kühlfluids (52), das vom Wärmetauscher (51) angesaugt wird, versorgt werden, wenn die Prozesse die Beharrungszustände erreichen.

8. Anlage zur Behandlung von organischen Verbindungen gemäß einem der Ansprüche 3 bis 7, die eine sechste Einheit (6) mit einem Reinigungssystem (61) zur Reinigung des Gasgemisches (D) aufweist, das vom Wärmetauscher (51) austritt, um möglichen vorhandenen aufgewirbelten Staub zu entfernen.

9. Anlage zur Behandlung von organischen Verbindungen gemäß Anspruch 8, die eine siebte Einheit (7) mit einem oder mehreren Verbrennungsmotoren (71) aufweist, die durch einen Hauptteil (D1) des Gasgemisches (D), das durch das Reinigungssystem (61) gereinigt ist, versorgt werden können, die mit Wechselstromgeneratoren (72) zur Erzeugung von elektrischer Energie (E_{EL}) verbunden sein können.

10. Anlage zur Behandlung von organischen Verbindungen gemäß Anspruch 9, die eine Heizeinrichtung (9) aufweist, um eine Flüssigkeit (F) durch thermische Energie (E_{T}) zu erwärmen, die durch den Betrieb der Verbrennungsmotoren (71) erzeugt wird, wobei die erwärmte Flüssigkeit (F) geeignet ist, um durch die Trocknungsbehandlung für die organischen Verbindung (A) durch ein entferntes Wärmesystem und/oder zur Erzeugung von zusätzlicher elektrischer Energie verwendet zu werden.

11. Anlage zur Behandlung von organischen Verbindungen gemäß einem der vorhergehenden Ansprüche, in der eine oder mehrere der Einheiten (1, ..., 7) in jeweiligen Blöcken (BL1 ..., BL 7) vormontiert sind, die unabhängig voneinander sind, wobei diese Blöcke (BL 1, ..., BL 7) transportierbar sind und geeignet sind, um derart zusammen verbunden zu sein, um eine Konstruktion der Anlage (100) an dem Ort zu vollenden, der für ihre Verwendung vorgesehen ist.

12. Anlage zur Behandlung von organischen Verbindungen gemäß einem der vorhergehenden Ansprüche, in der die Steuereinrichtungen (22, 32) unterteilte Ventile und Gegendruckeinrichtungen aufweisen, wobei die unterteilten Ventile jeweils an einem Eintritt der zweiten Einheit (2) zum Einleiten von im Wesentlichen wasserfreiem Material (B) und an einem Eintritt der dritten Einheit (3) zum Einleiten der festen Fraktion (B2) des im Wesentlichen wasserfreien Materials (B) angeordnet sind, wobei die Gegendruckeinrichtungen jeweils an einem Austritt der zweiten Einheit (2) zum Austreten der festen Fraktion (B2) vom im Wesentlichen wasserfreien Material (B) und an einem Austritt der dritten Einheit (3) zum Austreten der festen Fraktion (C2), die vom Vergasungsprozess erhalten wird, angeordnet sind.

13. Verfahren zur Behandlung von organischen Verbindungen, die die Stufen aufweisen:
- Trocknen der organischen Verbindungen (A), um ein im Wesentlichen wasserfreies Material (B) zu erhalten;
- Ausführen eines Pyrolyseprozesses des im Wesentlichen wasserfreien Materials (B) in einem ersten Reaktor (21), um daraus eine gasförmige Fraktion (B1) und eine feste Fraktion (B2) zu erhalten; wobei der Druck innerhalb des ersten Reaktors (21) bei einem Wert, der etwas oberhalb des Atmosphärendrucks ist, derart aufrechtzuerhalten, um den Eintritt von Luft von außen zum Inneren des ersten Reaktors (21) zu verhindern, sodass der Pyrolyseprozess im Wesentlichen ohne Eintritt von Oxidationsmitteln, die von der äußeren Umgebung kommen, stattfindet;
- Ausführen eines Vergasungsprozesses der festen Fraktion (B2) des im Wesentlichen wasserfreien Materials (B) in einem zweiten Reaktor (31), um daraus eine gasförmige Fraktion (C1) und eine feste Fraktion (C2) zu erhalten, wobei der Druck innerhalb des zweiten Reaktors (31) bei einem Wert, der etwas oberhalb des Atmosphärendrucks ist, derart aufrechtzuerhalten, um den Eintritt von Luft von außen zum Inneren des zweiten Reaktors (31) zu verhindern, sodass der Vergasungsprozess im Wesentlichen ohne Eintritt von Oxidationsmitteln, die von der äußeren Umgebung kommen, stattfindet;
- Erhalten eines Gasgemisches (D), dass die gasförmige Fraktion (C1), die aus dem Vergasungsprozess erhalten wird, und die gasförmige Fraktion (B1) des im Wesentlichen wasserfreien Materials (B) aufweist, zur Erzeugung von elektrischer und/oder thermischer Energie;
- Verwenden eines Sekundärteils (D2) des Gasgemisches (D) als Zuführung zur Verbrennungseinrichtung zum Versorgen der Pyrolyse- und Vergasungsprozesse, wenn diese Prozesse Beharrungszustände erreichen, in denen im Laufe der Stufen, in denen die Pyrolyse- und Vergasungsprozesse ausgeführt werden, der Druckwert innerhalb der ersten und zweiten Reaktoren (21, 31) größer als ein Atmosphärendruck bei einem Wert zwischen 19,613 Pa und 98,064 Pa ist.

## Revendications

1. Installation pour le traitement de composés organiques comprenant :
• une première unité (1) incorporant un moyen de séchage (11) adapté pour le traitement des composés organiques (A) afin d'obtenir une matière sensiblement anhydre (B) ;
• une deuxième unité (2) incorporant un premier réacteur (21) pour effectuer un processus de pyrolyse de la matière sensiblement anhydre (B) pour obtenir une fraction gazeuse (B1) et une fraction solide (B2) à partir de celle-ci ;
• une troisième unité (3) incorporant un second réacteur (31) pour effectuer un processus de gazéification de la fraction solide (B2) de la matière sensiblement anhydre (B) pour obtenir une fraction gazeuse (C1) et une fraction solide (C2) à partir de celle-ci, et adaptée pour obtenir un mélange gazeux (D) comprenant la fraction gazeuse (C1) obtenue à partir du processus de gazéification et la fraction gazeuse (B1) de la matière sensiblement anhydre (B) pour la génération d'énergie électrique (E_{EL}) et/ou d'énergie thermique ;
dans laquelle les premier et second réacteurs (21, 31) comprennent des moyens de commande (22, 32) correspondants adaptés pour maintenir la pression au sein desdits premier et second réacteurs (21, 31) pendant les processus de pyrolyse et de gazéification à une valeur légèrement au-dessus de la pression atmosphérique de façon à empêcher l'entrée d'air de l'extérieur vers l'intérieur des réacteurs (21, 31), de sorte que les processus aient lieu sensiblement en l'absence d'entrée d'agents oxydants provenant de l'environnement externe et dans laquelle une partie secondaire (D2) du mélange gazeux (D) est destinée à alimenter un moyen de combustion pour alimenter les processus de pyrolyse et de gazéification lorsque ces processus atteignent des états stables, dans lesquels la valeur de la pression au sein des premier et second réacteurs (21, 31) est supérieure à la pression atmosphérique d'une valeur entre 19,613 Pa et 98,064 Pa au cours des processus de pyrolyse et de gazéification.

2. Installation pour le traitement de composés organiques selon l'une des revendications précédentes, comprenant une quatrième unité (4) incorporant un moyen de vitrification (41) pour réaliser un processus de vitrification de la fraction solide (C2) obtenue à partir du processus de gazéification.

3. Installation pour le traitement de composés organiques selon l'une des revendications précédentes, comprenant une cinquième unité (5) incorporant un échangeur de chaleur (51) pour refroidir le mélange gazeux (D) pour la génération d'énergie électrique (E_{EL}) et/ou d'énergie thermique.

4. Installation pour le traitement de composés organiques selon la revendication 3, dans laquelle l'échangeur de chaleur (51) est du type superficiel comprenant un circuit de refroidissement (52) pour refroidir le mélange gazeux (D) par un échange de chaleur à contre-courant avec un fluide de refroidissement (53) s'écoulant au sein du circuit de refroidissement (52).

5. Installation pour le traitement de composés organiques selon la revendication 4, dans laquelle le fluide de refroidissement (53) est sensiblement de l'air qui est inséré dans l'échangeur de chaleur (51) à température ambiante.

6. Installation pour le traitement de composés organiques selon la revendication 4 ou 5, dans laquelle au moins une partie des gaz de fumée produits par le moyen de combustion sont alimentés au circuit de refroidissement (53) pour chauffer le fluide de refroidissement (52) par contact.

7. Installation pour le traitement de composés organiques selon l'une quelconque des revendications 4 à 6, dans laquelle les processus de pyrolyse et de gazéification sont exclusivement alimentés par la partie secondaire (D2) du mélange gazeux (D) et à partir d'au moins une partie du fluide de refroidissement (52) aspiré depuis l'échangeur de chaleur (51) lorsque les processus atteignent des états stables.

8. Installation pour le traitement de composés organiques selon l'une quelconque des revendications 3 à 7, comprenant une sixième unité (6) incorporant un système de purification (61) pour la purification du mélange gazeux (D) sortant de l'échangeur de chaleur (51) pour éliminer de l'éventuelle poussière en suspension présente.

9. Installation pour le traitement de composés organiques selon la revendication 8, comprenant une septième unité (7) incorporant un ou plusieurs moteurs à combustion interne (71) qui peuvent être alimentés par une partie principale (D1) du mélange gazeux (D) purifié par le système de purification (61) qui peut être associé à des alternateurs (72) pour la génération d'énergie électrique (E_{EL}).

10. Installation pour le traitement de composés organiques selon la revendication 9, comprenant un moyen de chauffage (9) pour chauffer un liquide (F) par l'intermédiaire d'énergie thermique (E_{T}) produite par le fonctionnement des moteurs à combustion interne (71), le liquide chauffé (F) étant apte à être utilisé par le traitement de séchage pour le composé organique (A), par un système de chauffage à distance, et/ou pour la génération d'énergie électrique supplémentaire.

11. Installation pour le traitement de composés organiques selon l'une quelconque des revendications précédentes, dans laquelle une ou plusieurs des unités (1, ..., 7) sont pré-assemblées en blocs (BL1,..., BL7) correspondants qui sont indépendants les uns des autres, ces blocs (BL1,..., BL7) étant transportables et étant aptes à être raccordés ensemble de façon à achever la construction de l'installation (100) à l'emplacement destiné à son utilisation.

12. Installation pour le traitement de composés organiques selon l'une quelconque des revendications précédentes, dans laquelle les moyens de commande (22, 32) comprennent des vannes de subdivision et un moyen de contre-pression, les vannes de subdivision étant situées au niveau d'une entrée de la deuxième unité (2) pour l'insertion d'une matière sensiblement anhydre (B), et au niveau d'une entrée de la troisième unité (3) pour l'insertion de la fraction solide (B2) de la matière sensiblement anhydre (B) respectivement, le moyen de contre-pression étant situé au niveau d'une sortie de la deuxième unité (2) pour la sortie de la fraction solide (B2) de la matière sensiblement anhydre (B) et au niveau d'une sortie de la troisième unité (3) pour la sortie de la fraction solide (C2) obtenue à partir du processus de gazéification, respectivement.

13. Procédé pour le traitement de composés organiques comprenant les étapes de :
• séchage des composés organiques (A) pour obtenir une matière sensiblement anhydre (B) ;
• réalisation d'un processus de pyrolyse de la matière sensiblement anhydre (B) dans un premier réacteur (21) pour obtenir une fraction gazeuse (B1) et une fraction solide (B2) à partir de celle-ci en maintenant la pression au sein du premier réacteur (21) à une valeur légèrement au-dessus de la pression atmosphérique de façon à empêcher l'entrée d'air de l'extérieur vers l'intérieur du premier réacteur (21), de sorte que le processus de pyrolyse ait lieu sensiblement en l'absence d'entrée d'agents oxydants provenant de l'environnement externe ;
• réalisation d'un processus de gazéification de la fraction solide (B2) de la matière sensiblement anhydre (B) dans un second réacteur (31) pour obtenir une fraction gazeuse (C1) et une fraction solide (C2) à partir de celle-ci en maintenant la pression au sein du second réacteur (31) à une valeur légèrement au-dessus de la pression atmosphérique de façon à empêcher l'entrée d'air de l'extérieur à l'intérieur du second réacteur (31), de sorte que le processus de gazéification ait lieu sensiblement en l'absence d'entrée d'agents oxydants provenant de l'environnement externe ;
• obtention d'un mélange gazeux (D) comprenant la fraction gazeuse (C1) obtenue à partir du processus de gazéification et la fraction gazeuse (B1) de la matière sensiblement anhydre (B) pour la génération d'énergie électrique et/ou thermique ;
• utilisation d'une partie secondaire (D2) du mélange gazeux (D) en tant qu'alimentation pour le moyen de combustion pour alimenter les processus de pyrolyse et de gazéification lorsque ces processus atteignent des états stables, dans lesquels au cours des étapes dans lesquelles les processus de pyrolyse et de gazéification sont réalisés, la valeur de la pression au sein des premier et second réacteurs (21, 31) est supérieure à la pression atmosphérique d'une valeur d'entre 19,613 Pa et 98,064 Pa.
